# EUROPÄISCHE PATENTANMELDUNG

(11) **EP 1 254 807 A1**
(43) Veröffentlichungstag der Anmeldung: **06.11.2002**
(21) Anmeldenummer: 01110634.1
(22) Anmeldetag: 30.04.2001
(51) Int. Cl.: B60P 3/20

(54) **Trennwand und Kühlfahrzeug**

(71) Anmelder: Brandt Kühlfahrzeugbau, 32699 Extertal (DE)
(72) Erfinder: Brandt, Werner, 32699 Extertal (DE)
(74) Vertreter: Dantz, Jan Henning

(57) **Zusammenfassung**

Eine Trennwand, insbesondere für Kühlfahrzeuge umfaßt ein an eine Außenkontur (2, 3, 4) angepaßtes Wandelement (1), an dem randseitig Dichtungen (6) vorgesehen sind. Erfindungsgemäß sind zumindest in einem Abschnitt Betätigungsmittel (7, 8) mit der Dichtung (6) verbunden, mittels der die Dichtung (6) von der Außenkontur (2, 3, 4) zumindest teilweise abziehbar ist. Die Trennwand wird vorzugsweise bei Kühlfahrzeugen eingesetzt, um in dem Laderaum verschiedene Abteilungen zu bilden. Die Trennwand ermöglicht eine besonders gute Abdichtung, die auf einfache Weise montierbar und demontierbar ist.

## Beschreibung

Die vorliegende Erfindung betrifft eine Trennwand, insbesondere für Kühlfahrzeuge, mit einem an eine Außenkontur angepassten Wandelement, an dem randseitig Dichtungen vorgesehen sind.

Insbesondere bei Kühlfahrzeugen müssen aufgrund scharfer Hygienegesetzgebungen die Isoliertrennwände immer besser abgedichtet werden. Durch eine randseitig umlaufende Abdichtung werden zwar diese Hygieneanforderungen erfüllt, allerdings ist ein Öffnen der Trennwände wegen des entstehenden Vakuums nicht mehr möglich. Es muß somit eine Be- oder Entlüftung eingebaut werden, damit Luft ausgetauscht werden kann. Um die Abdichtung zum Öffnen der Trennwand wieder aufzuheben, können innerhalb der Isolierwände mechanische Einrichtungen vorgesehen werden, die jedoch aufwendig in der Montage sind und zusätzlich auch eine schlechtere Isolierung der Trennwand bedingen. Es ist auch möglich, in die Trennwand Belüftungsklappen einzusetzen. Hierdurch wird die Isolation der Wand jedoch ebenfalls herabgesetzt. Außerdem können diese Belüftungsklappen einfrieren. Ferner gibt es Schlauchdichtungen, die mittels Luft zusammen oder auseinander gedrückt werden können. Da sich in der Schlauchdichtung Kondenswasser bildet, ist ein Einsatz bei Kühlfahrzeugen nur schlecht möglich.

Es ist daher Aufgabe der vorliegenden Erfindung, eine Trennwand der eingangs genannten Art zu schaffen, die mit einfachen Mitteln einen Luftaustausch zwischen verschiedenen Räumen ermöglicht und somit ein Öffnen der Trennwand zuläßt.

Diese Aufgabe wird mit einer Trennwand mit den Merkmalen des Anspruches 1 gelöst.

Wenn zumindest in einem Abschnitt Betätigungsmittel mit der Dichtung verbunden sind, mittels der die Dichtung von der Außenkontur zumindest teilweise abziehbar ist, kann über die Betätigungsmittel eine Öffnung zu dem benachbarten Raum hergestellt werden, so dass ein Luftaustausch zwischen den Räumen stattfinden kann. Dadurch verhindert kein Vakuum mehr die Bewegung der Trennwand. Die noch verbleibenden Reibkräfte durch die in anderen Bereichen anliegende Dichtung sind relativ gering und können von Hand auf einfache Weise überwunden werden. Kritisch ist lediglich die Anfangsbewegung, bei der ein Luftaustausch zwischen den einzelnen Abteilungen verhindert wird.

Gemäß einer bevorzugten Ausführungsform der Erfindung weist die Dichtung in dem Abschnitt mindestens eine Dichtlippe auf, die über die Betätigungsmittel biegbar ist. Das Biegen kann dabei über einen flexiblen Bandabschnitt erfolgen, der die Dichtung in dem Abschnitt umgreift. Die Öffnung wird dann durch Umbiegen der mindestens einen Dichtlippe erreicht, so dass ein Spalt zwischen der Außenkontur und der Trennwand gebildet ist.

Für eine mechanisch einfache Umsetzung der Betätigungsmittel ist ein Zugband vorgesehen, das an zwei gegenüberliegenden Seiten der Trennwand diese mit einem Bandabschnitt umgreift. Dabei kann das Zugband durch zwei an der Trennwand angebrachte Führungselemente gezogen sein, zwischen denen ein Griffabschnitt ausgebildet ist. Durch einfaches Ziehen an dem Griffabschnitt kann ein Spalt zwischen Außenkontur und Trennwand erzeugt werden.

Wenn die Trennwand um eine Drehachse verschwenkbar ausgebildet ist, kann gleichzeitig mit dem Ziehen an dem Griffabschnitt auch eine Schwenkbewegung eingeleitet werden, um die Trennwand in eine horizontale Lage zur Decke zu bringen.

Erfindungsgemäß wird auch ein Kühlfahrzeug mit den Merkmalen des Anspruches 7 bereitgestellt.

Die Erfindung wird nachfolgend anhand eines Ausführungsbeispieles mit Bezug auf die beigefügten Zeichnungen näher erläutert. Es zeigen:

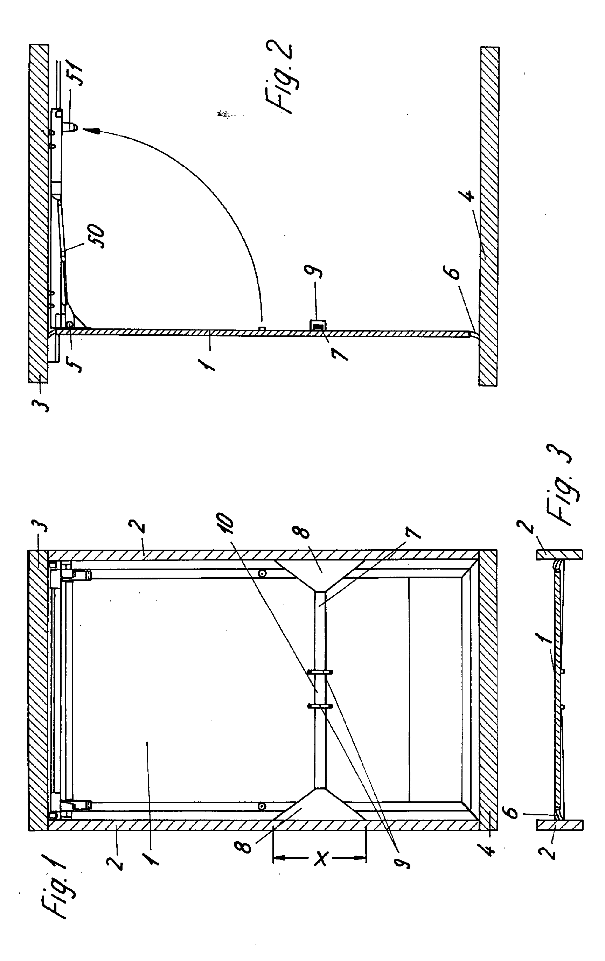

- Figur 1: eine Rückansicht eines Ausführungsbeispiels einer erfindungsgemäßen Trennwand im eingebauten Zustand;
- Figur 2: eine geschnittene Seitenansicht der Trennwand der Figur 1;
- Figur 3: eine geschnittene Draufsicht der Trennwand der Figur 1;

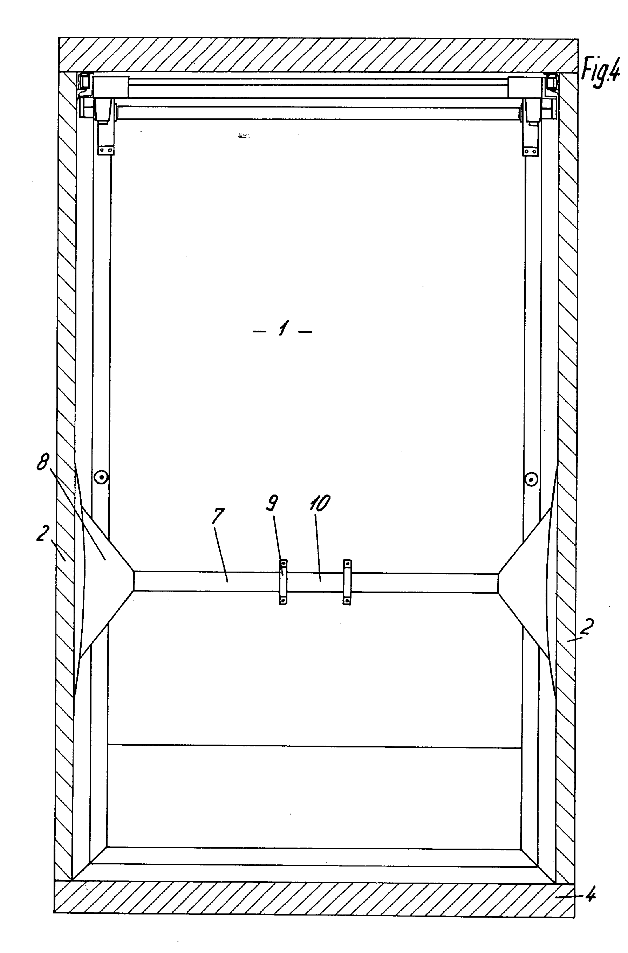

- Figur 4: eine Rückansicht der Trennwand der Figur 1 mit abgezogener Dichtung;
- Figur 5: eine geschnittene Draufsicht auf die Trennwand der Figur 1 im geschlossenen Zustand;
- Figur 6: eine geschnittene Draufsicht auf die Trennwand der Figur 1 mit abgezogener Dichtung;

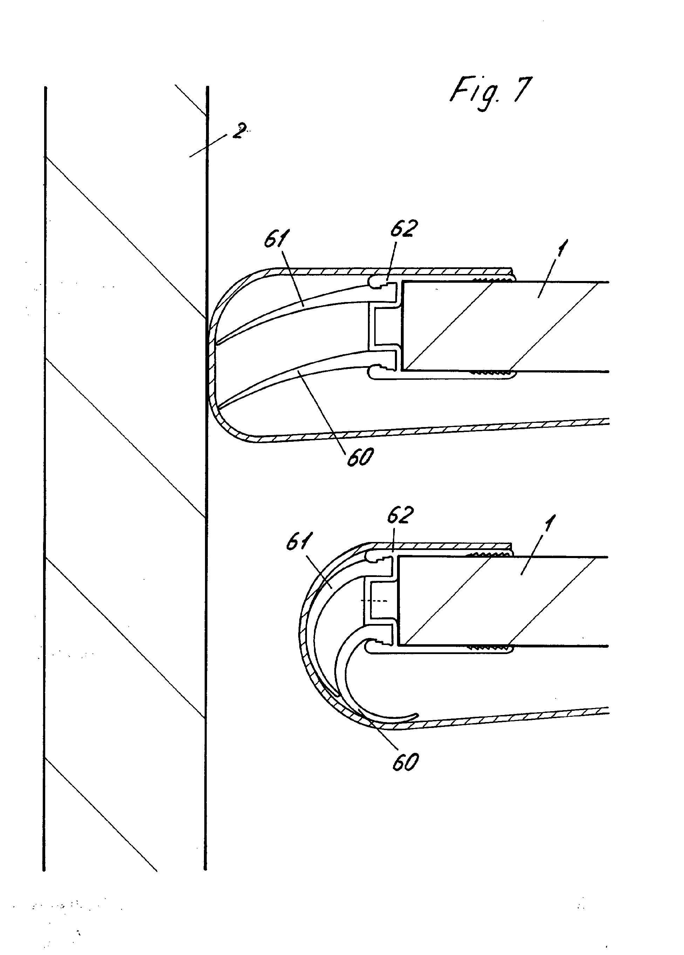

- Figur 7: eine vergrößerte Detailansicht des Randbereichs der Trennwand, und

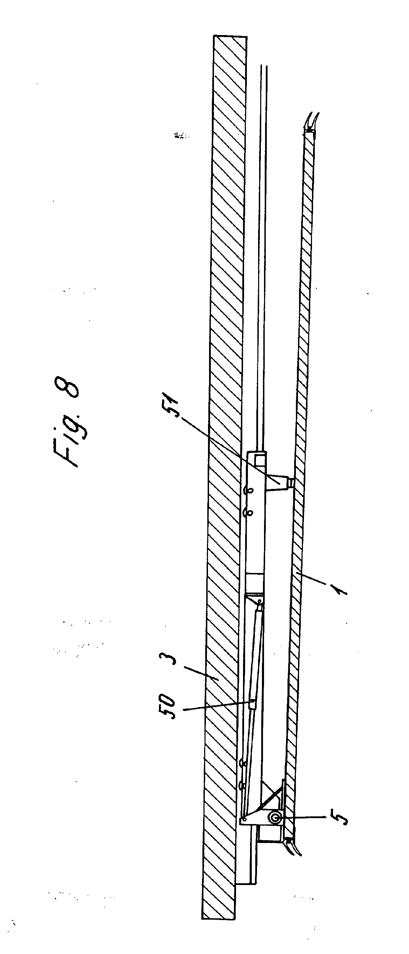

- Figur 8: eine geschnittene Seitenansicht der Trennwand der Figur 1 im hochgeklappten Zustand.

Die in den Figuren dargestellte Trennwand umfaßt ein Wandelement 1, das randseitig mit einer Dichtung 6 umgeben ist. Die Trennwand ist in einem Laderaum eines nicht näher dargestellten Kühlfahrzeuges eingebaut, das einen Laderaum mit Seitenwänden 2, einer Decke 3 und einem Boden 4 umfaßt. Die Trennwand ist um eine Achse 5 nach oben verschwenkbar, wobei eine Gasdruckfeder 50 die Schwenkbewegung unterstützt.

Die randseitigen Dichtungen 6 umfassen zwei Dichtlippen 60 und 61, die aus einem flexiblen Material gebildet sind. Die Dichtlippen 60 und 61 sind in einer Aufnahme 62 gehalten, die an dem Wandelement 1 festgelegt ist.

Zum Öffnen der Dichtung ist eine Betätigungseinrichtung vorgesehen, die ein Zugband 7 umfaß, das mit einem dreieckförmigen Bandabschnitt 8 verbunden ist. Der dreieckförmige Bandabschnitt 8 umgreift dabei die Dichtung 6 und ist auf der gegenüberliegenden Seite des Wandelementes durch an sich bekannte Befestigungmittel, wie Nieten etc. festgelegt. Das Zugband 7 ist durch zwei an dem Wandelement 1 festgelegte Führungselemente 9 gezogen und aus einem flexiblen Material gebildet.

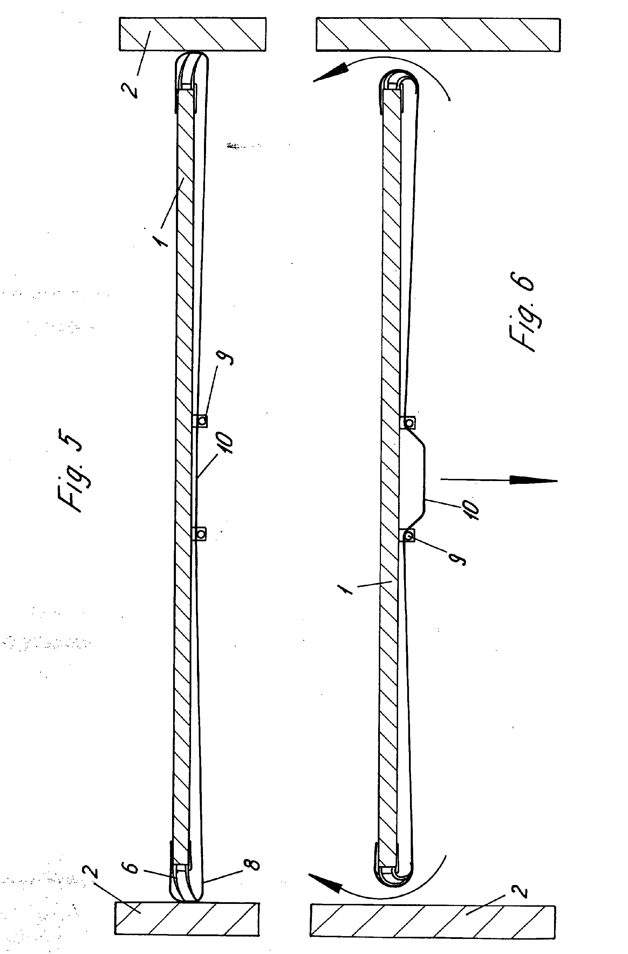

Wie insbesondere aus den Figuren 5 und 6 hervorgeht, ist zwischen den beiden Führungselementen 9 ein Griffabschnitt 10 ausgebildet, an dem zum Öffnen der Trennwand gezogen wird, so dass sich die Dichtung 6 von den Seitenwänden 2 abhebt. Dabei werden die Dichtlippen 60 und 61 über den Bandabschnitt 8 gezogen und umgebogen. Durch das Abheben der Dichtung 6 von den Seitenwänden 2 entsteht ein Spalt, so dass nur noch die Reibkräfte der Dichtung 6 in den übrigen nicht von der Seitenwand 2 abgehobenen Abschnitten überwunden werden muß, um die Trennwand zu öffnen. Ein Vakuum ist durch das Abziehen der Dichtung 6 aufgehoben.

Durch Ziehen an dem Griffabschnitt 10 wird somit zunächst ein Spalt ausgebildet, wobei nach einem geringfügigen Verschwenken der Trennwand schon am Boden und der Decke ebenfalls ein Spalt ausgebildet ist, so dass die Trennwand bequem nach oben weggeschwenkt werden kann und über einen Magnet mit Schwingungsdämpfer 51 fixiert werden kann. Die Trennwand ist dabei in an sich bekannter Wiese in dem Laderaum verstellbar gehalten.

Die Länge des Luftspaltes zwischen Seitenwand und Dichtung kann beliebig durch ein oder mehrere Zugbänder sowie die Form des Bandabschnittes 8 verändert werden. Die Montage der Betätigungseinrichtung kann an einer beliebigen Stelle der Trennwand randseitig erfolgen. Der Bandabschnitt 8 kann aus Nylon oder einem anderen geeigneten Material bestehen.

Die Trennwand wird vorzugsweise über Schwingungsdämpfer an der Decke montiert, damit Stöße, die während der Fahrt auftreten, abgefangen werden.

Ferner kann durch Ziehen an dem Griffabschnitt 10 von Hand auch das Lösen eines Verschlusses erfolgen oder eine mechanische Verriegelung betätigt werden.

Die Trennwand läßt sich durch Andrücken unterhalb der Decke 3 festsetzen und durch Runterziehen leicht wieder einbauen. Durch die erfindungsgemäße Trennwand läßt sich diese weitgehend verschleißfrei und wartungsfrei einbauen. Es ist keine Schmierung von mechanischen Bauteilen notwendig. Ferner ist die Betätigung reinigungsfreundlich, da keine Schmutzstellen, die schwer zugänglich sind, vorhanden sind. Ferner können keine mechanischen Teile einfrieren sowie die Betätigungseinrichtungen störungsfrei betrieben werden.

## Patentansprüche

1. Trennwand, insbesondere für Kühlfahrzeuge, mit einem an eine Außenkontur (2, 3, 4) angepaßten Wandelement (1), an dem randseitig Dichtungen (6) vorgesehen sind, **dadurch gekennzeichnet, dass** zumindest in einem Abschnitt Betätigungsmittel (7, 8) mit der Dichtung (6) verbunden sind, mittels der die Dichtung (6) von der Außenkontur (2, 3, 4) zumindest teilweise abziehbar ist.

2. Trennwand nach Anspruch 1, **dadurch gekennzeichnet, dass** die Dichtung (6) in dem Abschnitt mindestens eine Dichtlippe (60, 61) aufweist, die über die Betätigungsmittel (7, 8) biegbar ist.

3. Trennwand nach Anspruch 1 oder 2, **dadurch gekennzeichnet, dass** die Betätigungsmittel einen flexiblen Bandabschnitt (8) umfassen, der die Dichtung (6) in einem Abschnitt umgreift.

4. Trennwand nach einem oder mehreren der vorhergehenden Ansprüche 1 bis 3, **dadurch gekennzeichnet, dass** die Betätigungsmittel (7, 8) ein Zugband (7) umfassen, das an zwei gegenüberliegenden Seiten der Trennwand diese mit einem Bandabschnitt (8) umgreift.

5. Trennwand nach einem oder mehreren der vorhergehenden Ansprüche 1 bis 4, **dadurch gekennzeichnet, dass** das Zugband (7) durch zwei an der Trennwand angebrachte Führungselemente (9) gezogen ist, zwischen denen ein Griffabschnitt (10) ausgebildet ist.

6. Trennwand nach einem der Ansprüche 1 bis 5, **dadurch gekennzeichnet, dass** die Trennwand um eine Drehachse (5) verschwenkbar ausgebildet ist.

7. Kühlfahrzeug mit einem Laderaum, in dem mehrere voneinander trennbare Abteilungen vorgesehen sind, **dadurch gekennzeichnet, dass** eine Trennwand nach einem der vorhergehenden Ansprüche vorgesehen ist.

8. Kühlfahrzeug nach Anspruch 7, **dadurch gekennzeichnet, dass** die Trennwand in dem Kühlfahrzeug verschwenkbar gehalten ist und die Schwenkbewegung mittels einer Gasdruckfeder (50) unterstützt ist.
